# FASCICULE DE BREVET EUROPEEN

(11) **EP 3 584 157 B1**
(45) Date de publication et mention de la délivrance du brevet: **19.05.2021**
(21) Numéro de dépôt: 19180325.3
(22) Date de dépôt: 14.06.2019
(51) Int. Cl.: B64C 25/16

(54) **PROCÉDÉ DE MANOEUVRE DE PORTES DE SOUTE D'ATTERRISSEUR D'AÉRONEF**
VERFAHREN ZUM BEWEGEN VON FRACHTRAUMTÜREN DES FAHRWERKS EINES LUFTFAHRZEUGS
METHOD FOR OPERATING HOLD DOORS OF AIRCRAFT LANDING GEAR

(30) Priorité: 19.06.2018 FR 1855410
(43) Date de publication de la demande: 25.12.2019
(73) Titulaire: Safran Landing Systems, 78140 Vélizy-Villacoublay (FR)
(72) Inventeur: SENECHAL, Yannick, 77550 MOISSY-CRAMAYEL (FR); PASCAL, Vincent, 77550 MOISSY-CRAMAYEL (FR); BLANPAIN, Thierry, 77550 MOISSY-CRAMAYEL (FR); DOUX, Aurélien, 77550 MOISSY-CRAMAYEL (FR)
(74) Mandataire: Lavialle, Bruno François Stéphane

(56) Documents cités:
- EP-A1- 2 572 981
- FR-A1- 2 947 526
- US-A- 2 661 171
- US-A1- 2010 140 395

## Description

L'invention concerne un procédé de manœuvre d'une porte de soute d'atterrisseur d'aéronef.

### ARRIERE PLAN DE L'INVENTION

On connaît des aéronefs dont les atterrisseurs sont rétractables dans une soute en vol. Cette soute est généralement fermée par une trappe pantalon liée à l'atterrisseur et qui reste ouverte quand l'atterrisseur est déployé pour le laisser saillir, et au moins une porte fermant une zone de la soute accueillant les roues, et qui est bien souvent refermée une fois l'atterrisseur déployé.

Sur les aéronefs d'une certaine taille, comme les avions de transport commerciaux, les portes sont chacune associées à un actionneur pour déplacer la porte entre une position fermée et une position ouverte, et à un organe de verrouillage pour maintenir la porte fermée en vol. La séquence de déploiement de l'atterrisseur est alors la suivante :
- Déverrouiller les portes ;
- Ouvrir les portes ;
- Déverrouiller l'atterrisseur ;
- Déplacer l'atterrisseur vers la position déployée ;
- Verrouiller l'atterrisseur en position déployée ;
- Fermer les portes ;
- Verrouiller les portes.

La séquence de rétraction de l'atterrisseur est la suivante :
- Déverrouiller les portes ;
- Ouvrir les portes
- Déverrouiller l'atterrisseur ;
- Déplacer l'atterrisseur vers la position rétractée ;
- Verrouiller l'atterrisseur en position rétractée
- Fermer les portes ;
- Verrouiller les portes.

En général, chaque porte comporte son propre actionneur et son propre organe de verrouillage, ce qui conduit à des installations hydrauliques complexes, munies de vannes multiples à commander selon les séquences précitées.

Sur certains aéronefs plus simples, une liaison mécanique temporaire entre la porte et l'atterrisseur permet la manœuvre de la porte lors du déploiement de l'atterrisseur. Plus précisément, une olive solidaire de l'atterrisseur est engagée dans un cavalier monté pivotant sur la structure de l'aéronef et relié par une bielle à la porte de sorte que la descente de l'atterrisseur provoque l'ouverture de la porte. Pour une position donnée de la course de l'atterrisseur, la porte parvient en butée en position ouverte, et l'olive s'éloigne du cavalier alors que l'atterrisseur continue son mouvement vers la position déployée. Un organe élastique maintient la porte en butée en position ouverte. A la remontée de l'atterrisseur, l'olive accoste puis fait pivoter le cavalier, provoquant la fermeture de la porte à l'encontre de l'organe élastique alors que l'atterrisseur termine sa course vers la position rétractée. La porte est alors précontrainte en position fermée par l'actionneur de manœuvre de l'atterrisseur, et est maintenue en position verrouillée par le verrouillage de l'atterrisseur. Une telle disposition permet de supprimer l'actionneur de manœuvre des portes et les organes de verrouillage associés, mais ne permet pas la fermeture des portes lorsque l'atterrisseur est en position déployée.

Or la fermeture des portes alors que l'atterrisseur est en position déployée est avantageuse, car elle permet la diminution des turbulences aérodynamiques causées par l'ouverture béante de la soute, la diminution du bruit dû à ces turbulences, et améliore l'esthétique de l'aéronef, notamment au sol.

Pour pallier à cette absence de fermeture de la soute alors que l' atterrisseur est déployé, on a proposé dans le document FR2947526 d'associer les portes à l'atterrisseur par une liaison mécanique permanente liant le mouvement des portes à celui de l'atterrisseur, agencée pour provoquer un mouvement d'aller-retour des portes entre les positions fermée et ouverte lorsque l'atterrisseur est déployé ou rétracté. Cette disposition n'est pas toujours réalisable. Certaines géométries de soutes et/ou cinématiques de manœuvre de l'atterrisseur ne permettent pas une commande des portes en ouverture/fermeture par une liaison mécanique permanente avec l'atterrisseur. En outre, une telle liaison mécanique permanente oblige à prévoir des moyens de déconnexion pour ouvrir les portes et accéder à la soute au sol.

Une solution avec des liaisons mécaniques temporaires est connue du document US 2010/140395 A1, qui propose un procédé de manœuvre d'une porte de soute d'atterrisseur d'aéronef lors de séquences de déploiement ou de rétraction de l'atterrisseur, comportant l'utilisation d'une liaison mécanique temporaire (16 et 14) entre la porte et l'atterrisseur qui est effective quand l'atterrisseur est proche de la position rétractée, provoquant l'ouverture de la porte par l'atterrisseur lors d'un déploiement de l'atterrisseur et la fermeture de la porte par l'atterrisseur lors d'une rétraction de l'atterrisseur, mais libérant la porte de l'atterrisseur au moins quand celui-ci est proche de la position déployée. Le procédé connu comporte aussi l'utilisation d'une deuxième liaison mécanique temporaire (18 et 14) entre la porte et l'atterrisseur agissant sur la porte pour la fermer et l'ouvrir alors que l'atterrisseur est en position déployée et que la première liaison mécanique temporaire est interrompue.

### OBJET DE L'INVENTION

L'invention vise à proposer un procédé de manœuvre de portes de soute d'atterrisseur permettant leur fermeture alors que l'atterrisseur est en position déployée, mais permettant leur ouverture aisée au sol pour faciliter une inspection de la soute.

### PRESENTATION DE L'INVENTION

En vue de la réalisation de ce but, on propose un procédé de manœuvre d'une porte de soute d'atterrisseur d'aéronef lors de séquences de déploiement ou de rétraction de l'atterrisseur, comportant :
- l'utilisation d'une liaison mécanique temporaire entre la porte et l'atterrisseur qui est effective quand l'atterrisseur est proche de la position rétractée, provoquant l'ouverture de la porte par l'atterrisseur lors d'un déploiement de l'atterrisseur et la fermeture de la porte par l'atterrisseur lors d'une rétraction de l'atterrisseur, mais libérant la porte de l'atterrisseur au moins quand celui-ci est proche de la position déployée ;
- l'utilisation d'un actionneur de porte agissant sur la porte pour la fermer et l'ouvrir alors que l'atterrisseur est en position déployée et que la liaison mécanique temporaire est interrompue.

Grâce aux dispositions de l'invention, la porte est tout d'abord ouverte par l'atterrisseur lui-même lors de sa descente vers la position déployée. Puis quand ce dernier est déployé et que la liaison mécanique temporaire est interrompue, la porte est fermée par l'actionneur de porte. Celui-ci peut être d'une taille modeste, puisqu'il n'a pas à imposer à la porte une précontrainte importante qui doit être imposée à la porte pour garantir son étanchéité en vol à haute vitesse. A tout moment au sol, le personnel peut ouvrir la porte en commandant l'actionneur de porte.

La fermeture de la porte pour le vol est assurée par la liaison temporaire, l'actionneur de relevage de l'atterrisseur assurant cette fermeture et la précontrainte qui doit être imposée à la porte pour garantir son étanchéité en vol à haute vitesse. La porte est alors verrouillée en position fermée par le verrouillage de l'atterrisseur en position rétractée.

Le maintien de la porte en position ouverte ou fermée alors que l'atterrisseur est déployé est de préférence assuré par un organe ressort externe rappelant la porte vers l'une ou l'autre de ces positions.

De préférence, une manivelle est montée tournante sur une paroi de la soute et reliée par une bielle à la porte, la manivelle étant associée à un premier élément mécanique apte à coopérer avec un deuxième élément mécanique porté par l'atterrisseur quand celui-ci est proche de la position rétractée pour entraîner la manivelle en rotation. De préférence alors, l'actionneur de porte agit sur la manivelle pour provoquer sa rotation.

### DESCRIPTION DES FIGURES

L'invention sera mieux comprise à la lumière de la description qui suit d'un mode particulier de réalisation de l'invention, en référence aux figures des dessins annexés, parmi lesquelles :
- La figure 1 est une vue en perspective d'une soute d'aéronef contenant un atterrisseur verrouillé en position rétractée, et équipée de portes illustrées fermées et verrouillées, la trappe pantalon et les roues portées par l'atterrisseur ayant été omises pour plus de clarté ;
- La figure 2 est une vue agrandie de la figure 1 au niveau du mécanisme de manœuvre de l'une des portes ;
- La figure 3 est une vue analogue à la figure 1, montrant l'atterrisseur en cours de déploiement, les portes ayant été ouvertes par l'atterrisseur ;
- La figure 4 est une vue analogue à la figure 3, montrant l'atterrisseur arrivé en position déployée ;
- La figure 5 est une vue agrandie de la figure 4 au niveau du mécanisme de manœuvre de l'une des portes, celle-ci étant ouverte ;
- La figure 6 est une vue analogue à celle de la figure 5 montrant l'une des portes qui a été fermée grâce à l'actionneur de porte ;
- La figure 7 est une figure analogue à la figure 3, montrant l'atterrisseur en position déployée et les portes fermées ;
- La figure 8 est une vue de côté selon la flèche VIII de la figure 5 du mécanisme d'actionnement de porte alors que la porte est ouverte ;
- La figure 9 est une vue de côté selon la flèche IX de la figure 6 du mécanisme d'actionnement de porte alors que la porte est fermée.

### DESCRIPTION DETAILLEE DE L'INVENTION

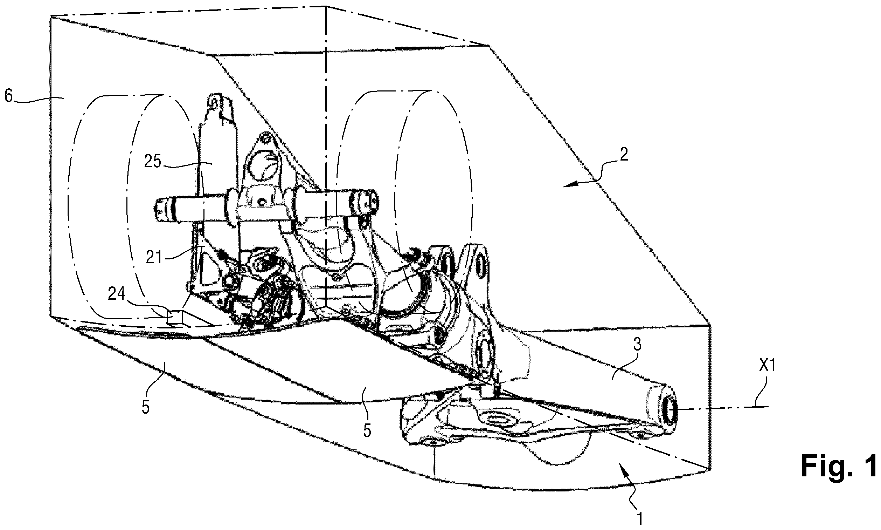

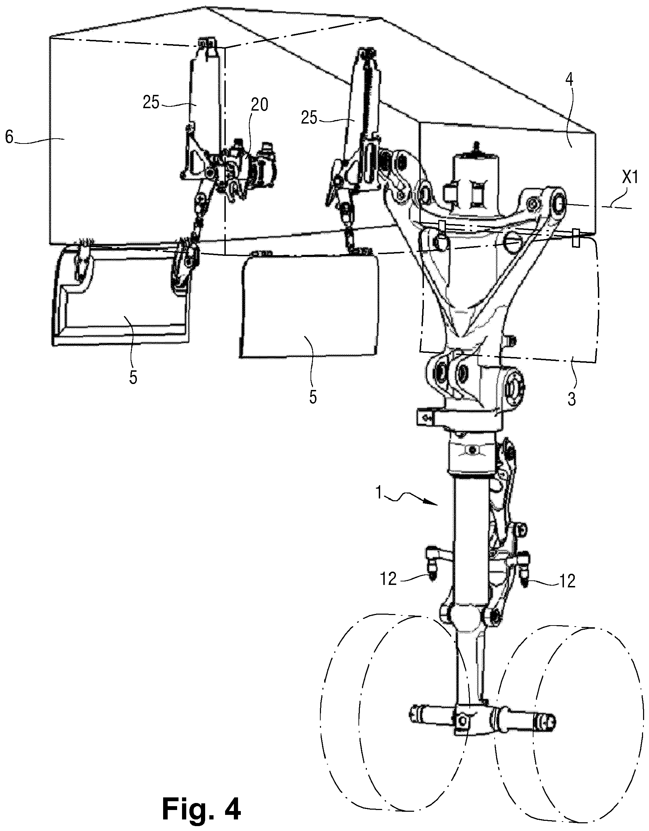

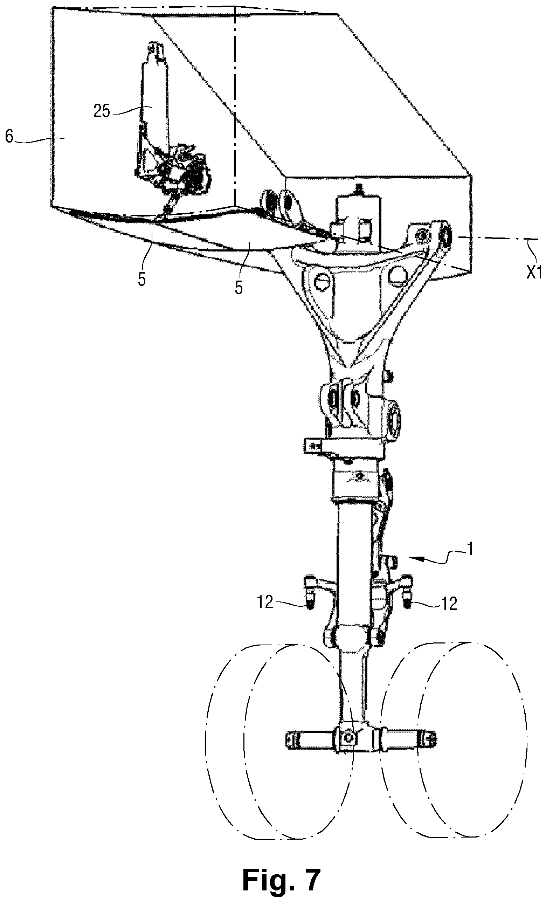

En référence aux figures, l'invention est relative à la séquence de manœuvre d'un atterrisseur 1 monté mobile sur un aéronef. Ici L'atterrisseur est monté pivotant selon un axe X1 pour être manœuvré entre une position rétractée illustrée à la figure 1 dans laquelle l'atterrisseur (et ses roues non représentées ici) est entièrement contenu dans une soute 2 de l'aéronef, et une position déployée illustrée aux figures 4 et 7 dans laquelle l'atterrisseur est stabilisé par un organe de contreventement non représenté. Un actionneur de manœuvre assure le déplacement de l'atterrisseur de l'une à l'autre des positions, tandis qu'un crochet de verrouillage verrouille l'atterrisseur en position rétractée. Tout ceci est bien connu et n'est rappelé que pour situer le contexte de l'invention.

La soute 2 est fermée par une trappe pantalon 3 (uniquement visible à la figure 4 en position ouverte) qui est articulée sur une paroi de fond 4 de la soute et qui est directement attelée à l'atterrisseur 1. La trappe 3 reste ouverte quand l'atterrisseur 1 est en position déployée. La soute 2 est également fermée par des portes 5 articulées sur des parois latérales 6 de la soute 2 et dont la manœuvre lors des séquences de déploiement et de rétraction de l'atterrisseur 1 est l'objet de l'invention.

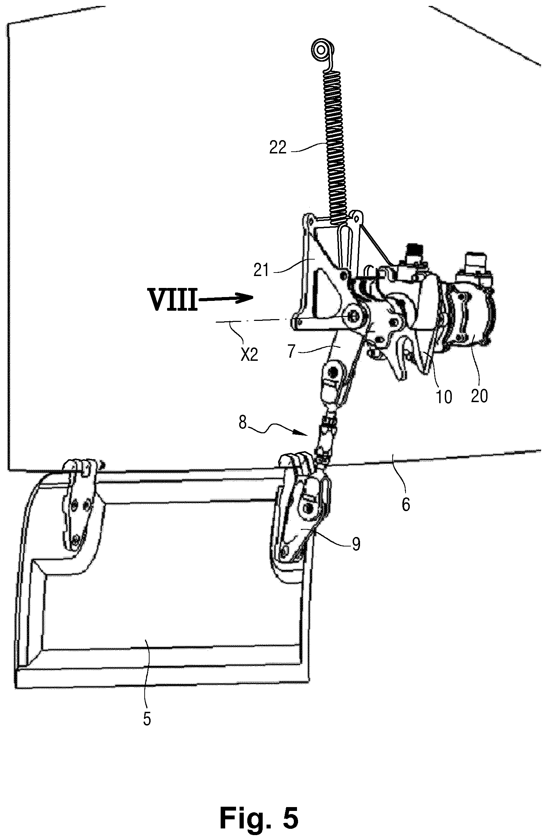

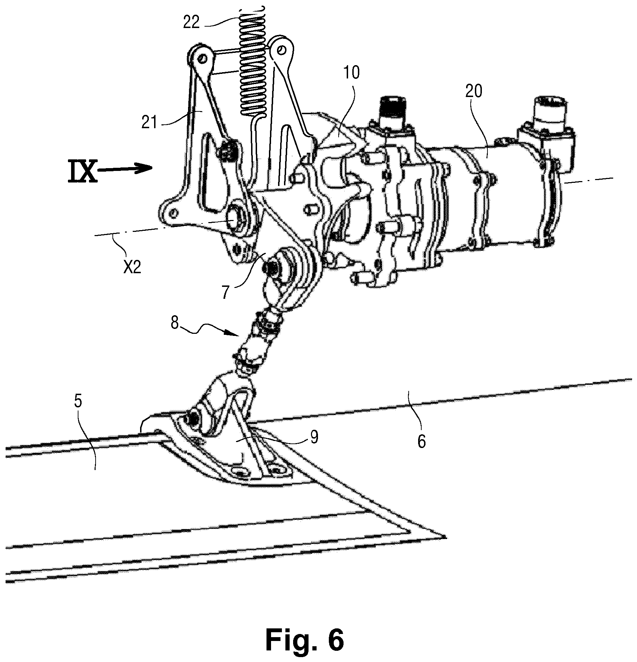

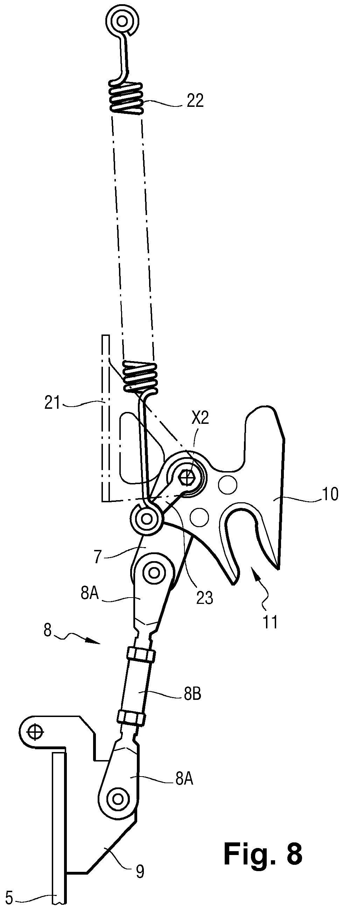

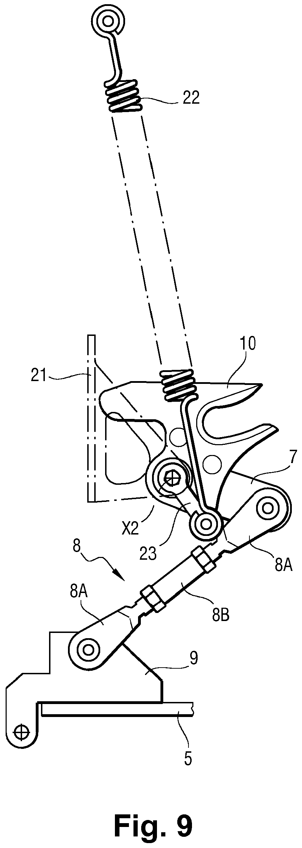

Comme cela est plus particulièrement visible aux figures 5, 6, chaque porte 5 est attelée par une bielle 8 à une manivelle 7 montée pivotante sur la paroi latérale 6 selon un axe X2 sensiblement parallèle à un axe d'articulation de la porte 5 sur cette même paroi. Ici, la manivelle 7 est solidaire d'un arbre monté pivotant sur un support 21 rapporté sur la paroi latérale 6. Chaque bielle 8 comporte deux embouts 8A dont l'un est attelé à la manivelle 7 et l'autre à une corne 9 de la porte 5, les embouts 8A étant vissés sur un corps 8B permettant un réglage fin de la longueur de la bielle 8. La manivelle 7 est manœuvrable entre une première position illustrée aux figures 5 et 8 dans laquelle la manivelle 7 est sensiblement alignée avec la bielle 8 pour maintenir la porte 5 en position ouverte, et une deuxième position illustrée aux figures 6 et 9 dans laquelle la manivelle 7 maintient la porte 5 en position fermée.

Conformément à l'invention, la manivelle 7 est déplacée de l'une à l'autre de ces positions par deux moyens :
- par une liaison temporaire entre l'atterrisseur 1 et la manivelle 7 qui est effective lorsque l'atterrisseur est proche ou dans la position rétractée. Cette liaison est réalisée par deux éléments mécaniques solidaires respectivement de la manivelle et de l'atterrisseur, à savoir un cavalier 10 solidaire en rotation de la manivelle 7 et qui définit une lumière 11 propre à recevoir une olive 12 solidaire de l'atterrisseur 1 quand celle-ci passe à proximité du cavalier 10, de sorte que le déplacement de l'atterrisseur lors de sa manœuvre provoque la rotation du cavalier 10, et, partant, la rotation de la manivelle 7 et donc la rotation de la porte 5 ;
- par un actionneur de porte 20, ici un actionneur électrique rotatif solidaire du support 21 sur lequel la manivelle 7 est montée pivotante, et adapté à provoquer la rotation de la manivelle 7 lorsqu'il est alimenté. L'actionneur de porte 20 comporte ici un arbre de sortie qui s'étend selon l'axe X2 pour être directement connecté à la manivelle 7. Lorsque l'actionneur de porte 20 n'est pas alimenté, il laisse libre la rotation de la manivelle 7.

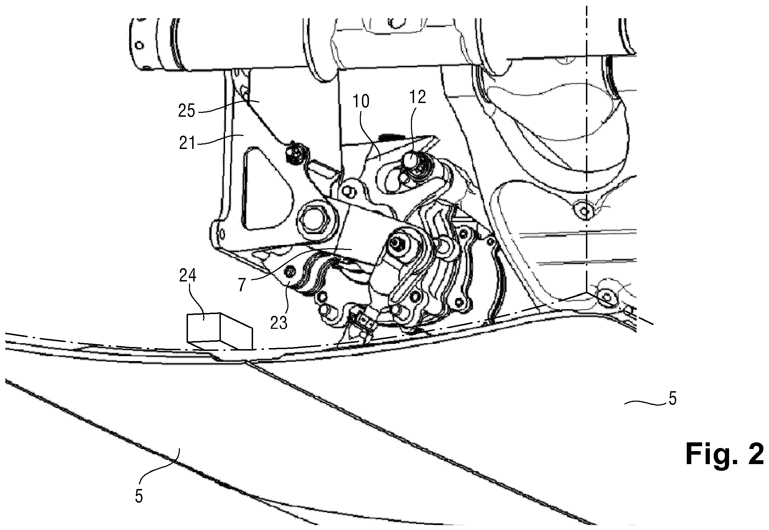

Comme cela est plus visible à la figure 8, la porte 5 est maintenue en position ouverte par un ressort 22 attelé à une corne 23 solidaire en rotation de la manivelle 7 et qui maintient l'ensemble manivelle/cavalier contre une butée du support 21. La porte 5 est maintenue en position fermée :
- lorsque l'atterrisseur 1 est en position rétractée, par le crochet de verrouillage qui maintient l'atterrisseur en position rétractée ;
- lorsque l'atterrisseur 1 est en position déployée, et comme cela est visible à la figure 9, par le ressort 22 qui tire sur la corne 23, donc sur la porte 5 pour la maintenir contre une butée 24 (visible sur les figures 1,2) solidaire de la paroi avant de la soute 2.

On notera que le ressort 22 est ici protégé par un cache 25 fixé à la paroi latérale 6, qui a été omis sur les figures 5, 6, 8, 9 pour plus de clarté.

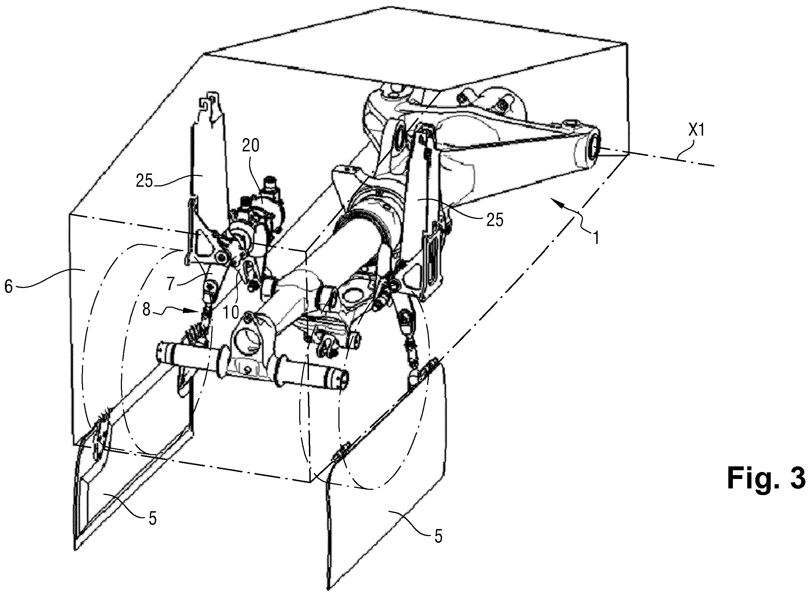

La manœuvre des portes 5 est maintenant détaillée en relation avec la manœuvre de l'atterrisseur de la position rétractée à la position déployée. Dans la situation illustrée à la figure 1 dans laquelle l'atterrisseur est verrouillé en position rétractée, les olives 12 sont engagées dans les cavaliers 10, de sorte les manivelles 7 sont dans leur deuxième position et que les portes 5 sont fermées et maintenues précontraintes contre la butée 24 par la précontrainte que l'actionneur de manœuvre de l'atterrisseur a imposée avant que l'atterrisseur ne soit verrouillé en position. Cette situation est celle illustrée aux figures 1 et 2 sur lesquelles on voit les olives 12 tirer sur les cavaliers 10 et maintenir les portes 5 en position fermée. Quand le pilote de l'aéronef commande la séquence de déploiement de l'atterrisseur 1, celui-ci est déverrouillé et commence à descendre sous l'effet de son propre poids, provoquant la rotation des cavaliers 10, et, partant l'ouverture de portes 5. L'atterrisseur parvient alors dans la situation illustrée à la figure 3, dans laquelle les olives 12 solidaire de l'atterrisseur 1, après avoir fait tourner les cavaliers 10 de sorte à amener les portes 5 en position ouverte, quittent les cavaliers 10 alors que l'atterrisseur 1 continue à descendre. La liaison temporaire entre les portes 5 et l'atterrisseur 1 est alors interrompue. L'atterrisseur 1 continue alors sa course jusque la position déployée dans laquelle il est stabilisé par l'organe de contreventement. Les portes 5 restent en position ouverte telle qu'illustré à la figure 5, par l'effet du ressort 22. Les actionneurs de porte 20 sont alors alimentés pour provoquer la fermeture des portes 5, comme illustré à la figure 6. La situation de l'atterrisseur 1 en position déployée, portes fermées est illustrée à la figure 7. Les portes 5 sont maintenues fermées par les ressorts 22, qui n'ont pas besoin d'imposer une précontrainte importante sur les portes 5 pour les maintenir fermées. Dès lors les actionneurs de porte 20 peuvent être choisis de puissance modeste, juste nécessaire pour ouvrir et fermer les portes à faible vitesse de vol.

Bien entendu, si une inspection de la soute 2 s'avérait nécessaire, il est toujours possible de provoquer l'ouverture des portes 5 en alimentant les actionneurs de porte 20, soit à l'aide d'une source d'énergie interne, soit par un générateur externe.

Lors que le pilote de l'aéronef commande la rétraction de l'atterrisseur 1, les actionneurs de porte 20 sont tout d'abord alimentés pour ouvrir les portes 5. Puis l'atterrisseur est déverrouillé et ramené vers la position rétractée par l'actionneur de manœuvre de l'atterrisseur. En arrivant à proximité de la position rétractée, les olives 12 solidaires de l'atterrisseur 1 accostent les cavaliers 10 et pénètrent dans la lumière 11 de ceux-ci, et forcent les cavaliers à pivoter de sorte à fermer les portes. L'atterrisseur 1 est alors ramené jusqu'à la position rétractée, précontraint par l'actionneur de manœuvre de sorte à plaquer les portes 5 contre la butée fermée 24, puis verrouillé en position rétractée.

L'invention n'est pas limitée à ce qui vient d'être décrit, mais englobe au contraire toute variante entrant dans le cadre défini par les revendications. En particulier, bien qu'ici les actionneurs de porte soient des actionneurs électriques rotatifs, tout autre type d'actionneur pourra être utilisé pour manœuvrer les portes, du moment qu'ils ne gênent pas l'actionnement des portes par l'atterrisseur lorsque celui-ci est au voisinage de la position rétractée.

Bien qu'ici les portes soient maintenues en position ouverte ou fermée quand l'atterrisseur est déployé par un organe ressort 23 externe à l'actionneur, tout autre moyen de maintien pourra être utilisé, comme par exemple un frein interne à l'actionneur.

Bien qu'ici chaque porte 5 soit actionnée par un mécanisme à bielle et manivelle et que l'actionneur de porte soit disposé pour faire tourner la manivelle, tout autre agencement pourra être utilisé du moment qu'il permette une liaison mécanique temporaire avec l'atterrisseur et un actionnement par l'actionneur quand la liaison mécanique temporaire est interrompue.

## Revendications

1. Procédé de manœuvre d'une porte (5) de soute (2) d'atterrisseur (1) d'aéronef lors de séquences de déploiement ou de rétraction de l'atterrisseur, comportant :
- l'utilisation d'une liaison mécanique temporaire (10, 12) entre la porte et l'atterrisseur qui est effective quand l'atterrisseur est proche de la position rétractée, provoquant l'ouverture de la porte par l'atterrisseur lors d'un déploiement de l'atterrisseur et la fermeture de la porte par l'atterrisseur lors d'une rétraction de l'atterrisseur, mais libérant la porte de l'atterrisseur au moins quand celui-ci est proche de la position déployée ;
- l'utilisation d'un actionneur de porte (20) agissant sur la porte pour la fermer et l'ouvrir alors que l'atterrisseur est en position déployée et que la liaison mécanique temporaire est interrompue.

2. Procédé selon la revendication 1, dans lequel une manivelle (7) est montée tournante sur une paroi (6) de la soute et reliée par une bielle (8) à la porte (5), la manivelle étant associée à un premier élément mécanique (10) apte à coopérer avec un deuxième élément mécanique (12) porté par l'atterrisseur (1) quand celui-ci est proche de la position rétractée pour entraîner la manivelle en rotation.

3. Procédé selon la revendication 2, dans lequel le premier élément mécanique est un cavalier (10) définissant une lumière (11) dans laquelle le deuxième élément mécanique (12) s'engage quand celui-ci est proche de la position rétractée pour entraîner la manivelle en rotation.

4. Procédé selon la revendication 2, dans lequel l'actionneur de porte (20) agit sur la manivelle (7) pour provoquer sa rotation.

5. Procédé selon la revendication 1, dans lequel on maintient la porte (5) en position ouverte ou fermée alors que l'atterrisseur est déployé au moyen d'un organe ressort (22) rappelant la porte vers l'une ou l'autre de ces positions.

## Patentansprüche

1. Verfahren zum Manövrieren einer Tür (5) eines Schachts (2) eines Luftfahrzeugfahrwerks (1) während Folgen des Ausfahrens oder Einfahrens des Fahrwerks, umfassend:
- die Nutzung einer temporären mechanischen Verbindung (10, 12) zwischen der Tür und dem Fahrwerk, die effektiv ist, wenn das Fahrwerk nahe der eingefahrenen Position ist, und die das Öffnen der Tür durch das Fahrwerk während eines Ausfahrens des Fahrwerks und das Schließen der Tür durch das Fahrwerk während eines Einfahrens des Fahrwerks verursacht, jedoch die Tür von dem Fahrwerk zumindest dann löst, wenn dieses nahe der ausgefahrenen Position ist;
- die Nutzung eines Türaktors (20), der auf die Tür einwirkt, um sie zu schließen und sie zu öffnen, wenn das Fahrwerk in der ausgefahrenen Position und die temporäre mechanische Verbindung unterbrochen ist.

2. Verfahren nach Anspruch 1, bei dem eine Kurbel (7) drehbar an einer Wand (6) des Schachts gelagert und über eine Stange (8) mit der Tür (5) verbunden ist, wobei die Kurbel mit einem ersten mechanischen Element (10) verbunden ist, das geeignet ist, mit einem von dem Fahrwerk (1) getragenen zweiten mechanischen Element (12) zusammenzuwirken, wenn das Fahrwerk nahe der eingefahrenen Position ist, um die Kurbel in Drehung anzutreiben.

3. Verfahren nach Anspruch 2, bei dem das erste mechanische Element eine Klammer (10) ist, die einen Schlitz (11) definiert, in den das zweite mechanische Element (12) eingreift, wenn dieses nahe der eingefahrenen Position ist, um die Kurbel in Drehung anzutreiben.

4. Verfahren nach Anspruch 2, bei dem der Türaktor (20) auf die Kurbel (7) einwirkt, um ihre Drehung zu verursachen.

5. Verfahren nach Anspruch 1, bei dem die Tür (5) in geöffneter oder geschlossener Position mittels eines Federorgans (22), das die Tür in die eine oder die andere dieser Positionen rückstellt, gehalten wird, während das Fahrwerk ausgefahren ist.

## Claims

1. A method of moving a door (5) of a well (2) for an aircraft undercarriage (1) during sequences of deploying or retracting the undercarriage, the method comprising:
- using a temporary mechanical connection (10, 12) between the door and the undercarriage that is effective when the undercarriage is close to its retracted position, causing the door to be opened by the undercarriage while the undercarriage is being deployed and causing the door to be closed by the undercarriage while the undercarriage is being retracted, but releasing the door from the undercarriage when the undercarriage is close to its deployed position; and
- using a door actuator (20) acting on the door to close and open the door when the undercarriage is in its deployed position and the temporary mechanical connection is interrupted.

2. A method according to claim 1, wherein a crank (7) is pivotally mounted on a wall (6) of the well and is connected by a connecting rod (8) to the door (5), the crank being associated with a first mechanical element (10) suitable, when the undercarriage is close to its retracted position, for co-operating with a second mechanical element (12) carried by the undercarriage (1) in order to drive pivoting of the crank.

3. A method according to claim 2, wherein the first mechanical element is a fork (10) defining a slot (11) in which the second mechanical element (12) engages when it is close to the retracted position in order to drive pivoting of the crank.

4. A method according to claim 2, wherein the door actuator (20) acts on the crank (7) in order to cause it to pivot.

5. A method according to claim 1, wherein the door (5) is held in the open or closed position while the undercarriage is deployed by means of spring member (22) urging the door towards one or the other of these positions.
